# EUROPÄISCHE PATENTSCHRIFT

(11) **EP 1 477 292 B1**
(45) Veröffentlichungstag und Bekanntmachung des Hinweises auf die Patenterteilung: **31.05.2006**
(21) Anmeldenummer: 03450107.2
(22) Anmeldetag: 30.04.2003
(51) Int. Cl.: B29C 45/28

(54) **Spritzgussdüsensystem für Kunststoff-Spritzgussanlagen**
Injection moulding nozzle system for injection moulding machines
Buse d'injection pour presses à injecter

(43) Veröffentlichungstag der Anmeldung: 17.11.2004
(73) Patentinhaber: Elast Kunststoffverarbeitungs-GmbH & Co. KEG, 4730 Heiligenberg (AT)
(72) Erfinder: Manigatter, Kurt, 4072 Alkoven (AT); Reslhuber, Christian, 4491 Niederneukirchen (AT); Fattinger, Paul, 4730 Heiligenberg (AT); Adlesgruber, Karl, 4511 Allhaming (AT)
(74) Vertreter: Babeluk, Michael

(56) Entgegenhaltungen:
- EP-A- 0 818 295
- DE-A- 19 502 430
- GB-A- 779 071
- PATENT ABSTRACTS OF JAPAN vol. 1995, no. 10, 30. November 1995 (1995-11-30) & JP 07 186205 A (MITSUBISHI MATERIALS CORP), 25. Juli 1995 (1995-07-25)

## Beschreibung

Die vorliegende Erfindung betrifft eine Spritzgussdüse für Kunststoff-Spritzgussanlagen, gemäß dem Oberbegriff vom Patentanspruch 1.

Aus dem Stand der Technik sind Nadelverschlussdüsen bekannt. Sie weisen gegenüber offenen Düsen, wie sie bei Spritzgießwerkzeugen breite Anwendung finden, den Vorteil eines kontrollierten Druckaufbaues im Hohlraum auf. Weiters kann bei Nadelverschlussdüsen durch das Verschließen der Öffnung gegenüber offenen Systemen eine Minimierung des Angussteiles erreicht werden, was soweit gehen kann, dass am Kunststoffprodukt ohne Nachbearbeitung weitgehend keine Angussstelle erkennbar ist.

Die meisten Angusssysteme, welche Nadelverschlussdüsen umfassen, weisen ein aktives Verschließen der Austrittsöffnung auf, das Öffnen erfolgt jedoch passiv über den Druck des in den Düsenraum eintretenden Ausgangsmaterials. Dies hat jedoch den Nachteil, dass der Hohlraum nicht kontrolliert befüllt werden kann. Um hier Abhilfe zu schaffen, wird bei solchen Systemen der Füllvorgang so gesteuert, dass in die Zufuhrleitung des Massestromes zur Düse eine Drossel zur Einstellung der Druckverteilung der Kunststoffmasse eingebaut wird. Diese Drossel ermöglicht eine Regelung des Massestromes durch eine Querschnittsverengung. Dabei ergibt sich jedoch das Problem, dass die Luft im Hohlraum nur unkontrolliert verdrängt werden kann. Dies ist darauf zurück zu führen, dass die über die Drossel eingebrachte Querschnittsverengung im Zufuhrkanal einen kontrollierten Druckaufbau zur Düse erschwert bzw. sogar unmöglich macht. Aufgrund der nur ungenügenden Luftverdrängung während des Füllvorganges, kann bei diesen Systemen Restluft im befüllten Hohlraum verbleiben, was zu Qualitätsverlusten und schlecht reproduzierbaren Anspritzverhältnissen führt.

Dieses Problem wird bei einem Nadelverschlusssystem, welches in der EP 818 295 beschrieben ist dadurch gelöst, dass der Öffnungshub der axial verschiebbaren Nadel der Nadelverschlussdüse einstellbar ist. Dies ermöglicht die Einstellung der Austrittsöffnung durch Änderung des Düsenanschnittquerschnittes über die Nadelstellung. Dadurch können sehr konstante Anspritzverhältnisse und damit auch eine exakte Reproduzierbarkeit erzielt werden. Weiters kann der Füllvorgang des Hohlraumes leicht justiert und damit das Werkzeug in der Balance auf einfache Art und Weise abgestimmt werden, d.h. insbesondere bei Mehrfachwerkzeugen ist es möglich, durch die Einstellung der Nadelverschlussdüse in allen Hohlräumen einen annähernd gleichen Druckaufbau zu erzielen.

Eine andere aus der DE 195 16 491 bekannte Nadelverschlussdüse löst das Problem den Anspritzpunkt zu optimieren durch eine Justierung, wobei an jeder Antriebsschrägfläche als Gegenfläche des Absperrkörpers eine Gegenschrägfläche ständig flächenparallel anliegt und zwischen dem der Antriebseinheit abgewandten freien Ende der Antriebsstange und dem dem Absperrkörper abgewandten freien Ende des Schiebers ein beide freien Enden zug- und druckfest miteinander verbindendes Kupplungsführungsstück angeordnet ist, welches an werkzeugplattenseitigen Führungsflächen in Schieberbewegungsrichtung geradlinig geführt ist, wobei die Antriebseinheit zur genauen Einstellung der Schließlage des Absperrkörpers in Schieberbewegungsrichtung axial verstellbar und arretierbar ist.

In der CH 686 715 wird ein Verfahren zur Herstellung von Verpackungsbehältern beschrieben, wobei die Durchflussmenge reguliert wird, indem der Strömungswiderstand in den Kanälen zwischen der Einspritzeinheit und jedem jeweiligen Formhohlraum mittels einzeln justierbarer Nadelventile, die den Fluss von Kunststoff in jeden jeweiligen Formhohlraum kontrollieren, ausgeglichen wird. Sobald die gewünschte Menge an Kunststoffmasse in den Hohlraum eingebracht ist, wird die Nadel mit Hilfe einer Kolben- und Zylindereinheit axial nach unten verschoben, und zwar bis sie mit dem Sitz der Düse in Verschlussanschlag kommt, wobei das untere Ende der Nadel mit der Fläche der Formwand im Wesentlichen bündig angeordnet ist.

Alle diese Systeme weisen jedoch den gravierenden Nachteil auf, dass die Nadelspitze während des Füllvorganges des Hohlraumes mit Kunststoffmasse relativ weit von der Schließposition zurück gezogen ist. Weiters von Nachteil ist, dass die Nadel in Öffnungsstellung und insbesondere während des Schließvorganges durch die Spritzgussmasse seitlich ausgelenkt werden kann, sodass ihr zylindrischer Verschlussteil unter Umständen nicht genau in die entsprechende Gegenöffnung trifft, sondern zuvor auf den Öffnungsrand stößt und damit im Laufe der Zeit zu Beschädigungen sowohl an der Nadelspitze selbst als auch an diesem Öffnungsrand führt.

Es ist deshalb bekannt Nadelverschlusssysteme so auszubilden, dass die Nadel ein spitz zulaufendes Verschlussende hat, welches in eine entsprechende konische Öffnung eintritt. Ferner ist aus der DE 28 32 877 eine Verschlussnadel bekannt, die durch einen Führungskörper gehalten wird, sodass sie nicht seitlich ausgelenkt werden kann. Dieser Führungskörper liegt unmittelbar um die Nadel, sodass der Strom des heißen Kunststoffs seitlich um diesen Führungskörper herum gelenkt werden muss und demgemäss in kalte Bereiche der Düsenwandung und deren Umgebung gelangt. Dadurch wird die Viskosität der Gussmasse kurzfristig geändert, was zu erheblichen Strömungsänderungen und Widerständen führen kann, die unter Umständen sogar eine ungenügende Füllung der Form bewirken können. Selbst wenn eine vollständige Formfüllung erreicht wird, kann dennoch ein optisch oder mechanisch oder hinsichtlich der Maßgenauigkeit unbefriedigendes Endprodukt entstehen, wenn der Kunststoff während des Spritzens zu stark abgekühlt wurde.

Um dieses Problem zu lösen, schlägt die CH 662 085 vor, in die Düsenspitze einen Vorzentrierkörper einzubauen, der eine konisch zulaufende Innenwand aufweist, die mit der Nadelachse einen Konuswinkel einschließt, der kleiner oder gleich ist einem Winkel zwischen einer Verbindungsgeraden von einem Punkt des vorderen Randes des zylindrischen Dichtbereiches zu einem auf einem parallelen Durchmesser liegenden Punkt des nächst größeren Absatzes der Verschlussnadel und der Nadelachse.

Durch diese Maßnahme wird erreicht, dass bei einer eventuellen Auslenkung der Verschlussnadel der Absatz mit dem größeren Durchmesser an der Innenseite des Vorzentrierkörpers zur Anlage kommt, sodass die empfindliche vordere zylindrische Dichtfläche der Nadel berührungsfrei bleibt. Durch Kanäle im Vorzentrierkörper wird außerdem erreicht, dass der Gießwerkstoff nicht über äußere kalte Bereiche umgelenkt werden muss. Vielmehr kann er auch im Bereich des Vorzentrierkörpers zwischen diesem und der Nadel hindurch fließen. Der Vorzentrierkörper selbst stellt jedoch einen hoch beanspruchten Verschleißteil dar, weshalb diese Lösung häufige Servicearbeiten erfordert.

Eine Weiterentwicklung dieser Idee gibt die DE 38 43 035 wieder, bei der die Innenhöhlung des Gehäuses einer Nadelverschlussdüse exzentrisch auf der Seite angeordnet ist, auf der die Zuführöffnung für den Werkstoff in dieses Gehäuse und in die Innenhöhlung mündet, wobei die Führung der konzentrisch im Gehäuse angeordneten Nadel auf ihrer der Zuführöffnung abgewandten Seite über die gesamte Nadellänge reicht. Auf diese Weise kann der Werkstoff die Nadel nicht mehr umfließen. Allerdings hat diese Lösung den enormen Nachteil, dass zwischen der Nadel und ihrer Führung enorme Reibungskräfte auftreten. Um hier Abhilfe zu schaffen, sieht diese Lösung vor, dass die Führungseinrichtung im Inneren gegen die Nadel hin offene Bereiche aufweist. Diese führen allerdings bei einem unerwünschten Eintreten von Gießwerkstoff zu nahezu unlösbaren Problemen durch vorzeitigen Verschleiß.

Die GB 779 071 A zeigt eine Spritzgussdüse der Nadel, die einen nichtveränderbaren Öffnungshub aufweist. Andererseits ist jedoch aus der EP 0 818 295 A ein Nadelverschlusssystem bekannt, bei dem die Nadel über ein hydraulisches System angetrieben wird, das eine freie Einstellbarkeit ermöglicht.

Eine Aufgabe der vorliegenden Erfindung ist es daher eine Spritzgussdüse mit Nadelverschluss-System zu schaffen, welche die oben aufgeführten Nachteile des zitierten Standes der Technik vermeidet und es ermöglicht, auf einfachste Art und Weise den Öffnungshub der in Längsrichtung axial verschiebbaren Verschlussnadel stufenlos einstellen zu können, damit die Spritzgussdüse für Gussmaterialien unterschiedlichster Viskositäten einsetzbar ist, womit die Durchflussrate stufenlos wählbar wird.

Eine weitere Aufgabe der vorliegenden Erfindung ist es, eine weitgehend verschleißfreie Nadelspitze zu gestalten.

Noch eine weitere Aufgabe der vorliegenden Erfindung ist es, eine Spritzgussdüse mit Nadelverschluss zu schaffen, welche eine einfache Demontage und Remontage sowohl der Spritzgussdüse aus dem maschinenfesten Teil der Spritzgussanlage, als auch der Verschlussnadel aus der Spritzgussdüse ermöglicht, um auf einfachste Art und Weise von anhaftendem Gussmaterial befreit zu werden, um dadurch die Lebensdauer des Systems Spritzgussdüse mit Nadelverschluss wesentlich zu erhöhen. Dies ist insbesondere beim Einsatz in Kaltkanalsystemen, wie sie zur Herstellung von Produkten aus Silikonkautschuk eingesetzt werden, von großem Vorteil.

Erfindungsgemäß werden diese Aufgaben durch die Merkmale der Ansprüche 1,15 und 18 gelöst.

Die Erfindung wird nachfolgend anhand der Figuren näher erläutert. Darin zeigt:
- Fig. 1: einen Längsschnitt durch das erfindungsgemäße Spritzgussdüsensystem.
- Fig. 2: zeigt einen vergrößerten Ausschnitt aus Fig. 1 mit der Düsenspitze, welche an der Kavitätsplatte anliegt, wobei hier die Nadelspitze den Durchtrittsbereich für die Spritzgussmasse verschlossen hält.
- Fig. 3: zeigt denselben vergrößerten Ausschnitt aus Fig. 1, allerdings ist hier die Nadelspitze bis zum maximalen Hub zurück gezogen.
- Fig. 4: zeigt einen Schnitt durch den vergrößerten Ausschnitt aus Fig. 2 entlang der Linie A-A.

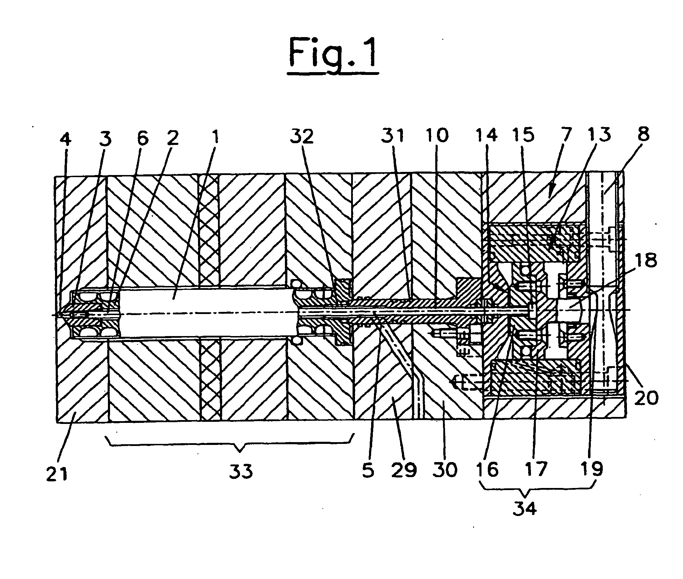

Wie aus Fig. 1 erkennbar, ist das erfindungsgemäße Spritzgussdüsensystem für Kunststoff-Spritzgussanlagen mit einem Nadelverschluss 6 ausgestattet. Das System ist sowohl für unterschiedliche Kavitäten als auch für Kunststoffe unterschiedlicher Viskositäten einsetzbar. Dadurch weist das Einsatzfeld einer Anlage mit dem erfindungsgemäßen Spritzgussdüsensystem eine sehr große Flexibilität auf. Einerseits können durch einfachen Austausch der Kavitätsplatten 21 unterschiedlichste Gegenstände aus demselben Spritzgussmaterial hergestellt werden, andererseits ist es möglich, durch Änderung des Hubbereiches Gegenstände aus Spritzgussmassen mit unterschiedlichsten Viskositäten herzustellen, wobei eine Änderung des Hubbereiches im Zusammenwirken mit Einkerbungen 11 in der Nadel die Durchflussrate eines bestimmten Spritzgussmaterials bei vorgegebener Temperatur bestimmt.

Das erfindungsgemäße Spritzgussdüsensystem besteht aus einem temperierbaren Düsenkörper 2 und einer eingesetzten Düsenspitze 3. Sie weist ferner eine Austrittsöffnung 4 und eine Zufuhröffnung 5 für die Kunststoffmasse auf, sowie eine den Düsenkörper 2 durchdringende Nadel 6, welche durch eine Betätigungsvorrichtung 7 im Düsenkörper 2 axial in Längsrichtung verschiebbar ist. Der Öffnungshub der in Längsrichtung axial verschiebbaren Nadel 6 ist über einen Hubbegrenzer 8 einstellbar. Die Nadelspitze 9 weist in ihrem Übergangsbereich zum Nadelschaft 10 Einkerbungen 11 für den Durchtritt der Spritzgussmasse auf, wobei der Nadelschaft 10 in ständigem Kontakt mit einem Nadelführungsbereich 12 der Düsenspitze 3 steht.

Die Betätigungsvorrichtung 7 kann sowohl als Hydraulikantrieb als auch als Pneumatikantrieb ausgebildet sein, wobei aufgrund der örtlichen Gegebenheiten und der kostengünstigeren Bauart meist ein Pneumatikantrieb in Frage kommen wird.

Eine Besonderheit der vorliegenden Erfindung stellt die zweiteilige Bauweise des Kolbens 13 dar, wobei der in der Betätigungsvorrichtung 7 gelagerte Teil 14 der Nadel 6 ein Endstück 15 mit größerem Durchmesser als dem Nadelschaft 10 hat und mit diesem Endstück 15 zwischen den beiden Kolbenteilen 16 und 17 eingeklemmt ist.

Der Teil 17 des zweiteiligen Kolbens 13 trägt einen Kolbenstempel 18 welcher aus dem Hydraulik- oder Pneumatikantriebssystem herausragt, wobei der maximale Weg des Kolbenstempels 18 aus dem Hydraulik- oder Pneumatikantriebssystem von einem Hubbegrenzer 8 bestimmt wird. Dieser Hubbegrenzer 8 hat einen kegel- oder keilförmigen Abschnitt 19, welcher über eine nicht dargestellte Stellvorrichtung entlang eines Weges senkrecht zu einer gedachten Verlängerung der Nadelachse bewegt wird.

Diese Stellvorrichtung kann im einfachsten Fall eine von Hand betätigte Spindel, ein Schieber, oder jede andere denkbare Stellvorrichtung sein. Aufgrund der speziellen Anordnung des Hubbegrenzers 8 kann die Stellvorrichtung von der Bedienerseite aus betätigt werden, ohne Teile der Vorrichtung aus ihrer Montageanordnung lösen zu müssen, wie dies bei der Vorrichtung nach EP 818 295 der Fall ist. Dadurch verringert sich die Rüstzeit bei der Umstellung auf eine andere Kavitätsform oder auch bei geänderter Viskosität der Spritzgussmasse erheblich. Weiters kann eine Nachjustierung auf sehr einfache und rasche Art erfolgen. Es ist auch möglich, die Stellvorrichtung programmgesteuert zu bedienen.

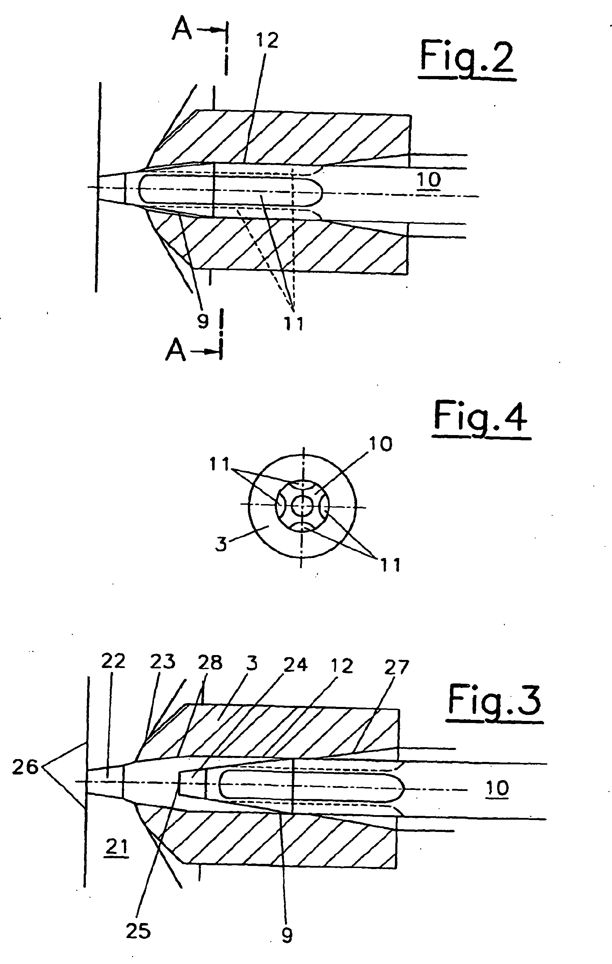

Wie aus den Figuren 2 und 3 sehr gut hervorgeht, liegt die Spritzgussdüse 1 mit ihrer bevorzugt konkav ausgebildeten Aufsitzfläche 23 der Düsenspitze 3 an der Kavitätsplatte 21 an, welche eine konisch zulaufende Durchtrittsbohrung 22 aufweist, in welche die Nadel 6 zum Verschließen des Zulaufweges mit dem Vorderteil 24 der Nadelspitze 9 eindringt und formschlüssig mit ihrer Spitzenfläche 25 mit der inneren Oberfläche 26 der Kavitätsplatte 21 abschließt. Die Innenwand der Düsenspitze 3 ist in Fließrichtung der Spritzgussmasse zwischen zwei konisch zulaufenden Bereichen 27 und 28 zylindrisch ausgebildet. Dieser Bereich steht als Nadelführungsbereich 12 in ständigem Kontakt mit dem zylindrischen Nadelschaft 10. Durch diese Konstruktion ist es in Kombination mit dem Hubbegrenzer 8, welcher den maximalen Hubbereich so einstellt, dass der Nadelschaft zumindest mit einem sehr schmalen ringförmigen Bereich innerhalb des zylindrischen Nadelführungsbereiches 12 liegen muss, möglich zu verhindern, dass die Nadelspitze jemals aus ihrer zentrierten Lage heraus gehen kann. Dadurch kann weder die Kante 25 der Nadelspitze, noch das konisch zulaufende Ende der Nadelspitze 9 jemals an der Innenfläche der Düsenspitze 3 entlang reiben. Der einzige Kontakt entsteht im Augenblick des Verschlusses der Durchtrittsbohrung 22. Da dieser Kontakt jedoch vollflächig gleichzeitig erfolgt, kann es auch in diesem Augenblick zu keiner Abnützung der Nadelspitze 9 kommen.

Da der Nadelführungsbereich 12 in Umfangsrichtung in ständigem Kontakt mit dem zylindrischen Nadelschaft 10 steht, ist es erforderlich, im Übergangsbereich des zylindrischen Nadelschaftes 10 in die konisch zulaufende Nadelspitze 9 mehrere in Umfangsrichtung gleichmäßig verteilte Einkerbungen 11 vorzusehen um einen ungehinderten Durchtritt der Spritzgussmasse zu ermöglichen. Diese Konstruktion verhindert zusätzlich, dass es zu einem seitlichen Druck auf die Nadel durch die Spritzgussmasse kommen kann.

Eine ähnliche Lösung schlägt auch die CH 662 085 vor, jedoch finden sich hier die Einkerbungen in einem separaten Vorzentrierkörper, welcher innerhalb der Düsenspitze eingebaut ist. Da es speziell bei der Verarbeitung von Silikonkautschuk nach einiger Zeit zu verfestigten Kunststoffanhaftungen auch innerhalb der Düsenspitze kommt, ist es erforderlich, diese anhaftenden Reste in regelmäßigen Serviceintervallen möglichst vollständig wieder zu entfernen. Diese Reinigung ist beim erfindungsgemäßen Spritzgussdüsensystem mit wesentlich weniger Arbeitsaufwand, rascher und vollständigen durchzuführen, als bei der Konstruktion nach CH 662 085.

Beim Ausbau der Nadel 6 aus dem erfindungsgemäßen Spritzgussdüsensystem liegt eine vollständig glatte Innenoberfläche der Düsenspitze 3 frei, wobei die Düsenspitze 3 zur Reinigung nicht aus dem Düsenkörper 2 ausgebaut werden muss. Bei der Konstruktion nach CH 662 085 ist es erforderlich, die Düsenspitze vom Düsenkörper zu trennen, um den Vorzentrierkörper ausbauen und reinigen zu können, wobei innenliegende Einkerbungen schlechter für die Reinigung zugänglich sind, als außenliegende Einkerbungen, wie sie in der erfindungsgemäßen Nadel 6 vorliegen.

Die Einkerbungen 11 können im Wesentlichen die Form eines Abschnittes eines Zylindermantels aufweisen. Es ist auch denkbar, dass die Einkerbungen 11 wendelförmig ausgebildet sind. Eine besonders vorteilhafte Ausführungsform der Erfindung weisen im Wesentlichen keilförmig ausgebildete Einkerbungen 11 auf. Diese Form der Einkerbung bringt in Verbindung mit dem Hubbegrenzer 8 im Hinblick auf die Steuerbarkeit des Durchflusses die besten Ergebnisse. Die Anzahl der Einkerbungen 11 in Umfangsrichtung der Nadel 6 ist im Prinzip frei wählbar. Optimalerweise wird sie jedoch zwischen 3 und 5 liegen.

Die Nadel 6 ist in den Verteilerplatten 29 und 30 innerhalb einer Führungsbuchse 31 gelagert, welche die Verteilerplatten 29 und 30 durchdringt und mit einem Abschnitt 32 in den Düsenkörper 2 ragt. Diese Konstruktion erhöht noch die Sicherheit der Nadel 6 vor einem Verbiegen durch seitlichen Druck durch die Spritzgussmasse, da die Eintrittsöffnung 5 der Spritzgussmasse in Fließrichtung betrachtet noch vor dem Abschnitt 32 der Führungsbuchse 31 liegt. Besonders vorteilhaft wird diese erfindungsgemäße Konstruktion, sobald die Nadel 6 zur Reinigung aus dem Düsenkörper 2 heraus gezogen bzw. wieder in diesen eingebaut wird, da die Nadel 6 zur Reinigung nicht aus der Führungsbuchse 31 herausgenommen werden muss und somit stabiler gehalten wird, während sie in Achsrichtung bewegt wird. Diese Maßnahme verringert ebenfalls die Gefahr der Beschädigung der Nadelspitze 9.

Es ist leicht vorstellbar, dass eine oder mehrere der Spritzgussdüsensysteme aus Fig. 1 hintereinander angeordnet ein gemeinsames Kunststoff-Spritzgießwerkzeug bilden, wobei die mindestens eine Spritzgussdüse 1 in einem Düsenblock 33 und die mindestens eine Betätigungsvorrichtung 7 in einem Antriebsblock 34 angeordnet sind, und wobei zwischen dem Düsenblock 33 und dem Antriebsblock 34 Verteilerplatten 29 und 30 für die Zuführung der Spritzgussmasse vorgesehen sind. Der mindestens eine Hubbegrenzer 8 ist in einem Deckel 20 der Betätigungsvorrichtung 7 angeordnet. Die Kavitätsplatte 21, der Düsenblock 33, die Verteilerplatten 29 und 30, der Antriebsblock 34, sowie der Deckel 20 der Betätigungsvorrichtung 7 bilden den maschinenfesten Teil der Spritzgussanlage.

Es ist auch möglich, die Betätigungsvorrichtung 7 in die Verteilerplatten 29 und 30 zu integrieren. Damit kann die Bauhöhe der Anlage verringert werden, ohne einen wesentlichen Mehraufwand in der Fertigung des Werkzeuges zu verursachen. Der Hubbegrenzer 8 wird direkt von der Maschinenbedienseite aus betätigt.

Weiters ist es möglich, in einer Weiterführung der Erfindung den Hubbegrenzer 8 so auszubilden, dass mehr als eine Verschlussnadel 6 von einem Hubbegrenzer 8 in ihrem Hub begrenzt werden.

Zur Demontage und Remontage des Spritzgussdüsensystems des erfindungsgemäßen Kunststoff-Spritzgießwerkzeuges zur Reinigung der Spritzgussdüse 1 und der Nadel 6 von eventuell anhaftenden Kunststoffresten, oder zum Austausch eventuell beschädigter Teile des Spritzgussdüsensystems durch Bruch oder ungeschickte Handhabung bei der Montage, wird der maschinenfeste Teil des Spritzgusswerkzeuges von der Maschinenaufspannplatte gelöst, der Deckel 20 der Betätigungsvorrichtung 7 entfernt und die Betätigungsvorrichtung 7 im geschlossenen Zustand mit der Nadel 6 aus dem Spritzgussdüsensystem herausgezogen, dann die Führungsbuchse 31 entfernt, worauf anschließend der Düsenkörper 2 mit der Düsenspitze 3 aus dem Düsenblock 33 herausnehmbar ist. Sämtliche Bauteile sind dann leicht zu reinigen, innenliegende Wände weisen keine schwer zugänglichen Bereiche auf und die Nadel 6 ist durch die Halterung in der Führungsbuche 31 und den Umstand, dass der Nadelkopf 15 nicht aus der Betätigungsvorrichtung 7 heraus genommen werden muss, leichter handhabbar als bei herkömmlichen Systemen. Lediglich bei einem Nadelbruch wird die Betätigungsvorrichtung geöffnet, indem die beiden Zylinderteile 16 und 17 voneinander gelöst werden.

Um Servicearbeiten noch einfacher und rascher durchzuführen, hat es sich als besonders vorteilhaft erwiesen, den maschinenfesten Teil der Spritzgussanlage vor dem lösen von der Maschinenaufspannplatte mit dem beweglichen Teil der Spritzgussanlage über Schnellspanneinrichtungen fest zu verbinden.

Das erfindungsgemäße Spritzgussdüsensystem kann, da es im Düsenkörper 2 eine Temperiervorrichtung aufweist, sowohl für die Verarbeitung von Silikonkautschuk als Kaltkanalangusssystem, als auch zur Verarbeitung von Thermoplasten als Heißkanalangusssystem eingesetzt werden. Es ist selbstverständlich auch möglich mit dieser Erfindung die Verarbeitung von Gummi im Spritzgussverfahren problemlos durchzuführen.

## Patentansprüche

1. Spritzgussdüsensystem für Kunststoff-Spritzgussanlagen, welche mit einem Nadelverschluss ausgestattet ist und geeignet ist, sowohl für unterschiedliche Hohlräume als auch für Kunststoffe unterschiedlicher Viskositäten eingesetzt zu werden, wobei die Spritzgussdüse (1) einen Düsenkörper (2) mit Düsenspitze (3) umfasst, der eine Austrittsöffnung (4) und eine Zufuhröffnung (5) für die Kunststoffmasse aufweist, sowie eine im Düsenkörper angeordnete, in Längsrichtung axial verschiebbare Nadel (6) mit einer Nadelspitze (9), die in ihrem Übergangsbereich zum Nadelschaft (10) mindestens eine Einkerbung (11) für den Durchtritt der Spritzgussmasse aufweist, wobei der Nadelschaft (10) in ständigem Kontakt mit einem Nadelführungsbereich (12) der Düsenspitze (3) steht und wobei eine Betätigungsvorrichtung (7) zur Betätigung der im Düsenkörper (2) verschiebbaren Nadel (6) vorgesehen ist, **dadurch gekennzeichnetdass** ein Hubbegrenzer (8) vorgesehen ist, mit dem der Öffnungshub der in Längsrichtung axial verschiebbaren Nadel (6) begrenzbar ist, dass der Hubbegrenzer (8) einen kegel-oder keilförmigen Abschnitt (19) aufweist, welcher über eine Stellvorrichtung entlang eines Weges senkrecht zu einer gedachten Verlängerung der Nadelachse bewegbar ist wird und dass der Düsenkörper (2) temperierbar ausgeführt ist.

2. Spritzgussdüsensystem nach Anspruch 1, **dadurch gekennzeichnet, dass** die Betätigungsvorrichtung (7) als Hydraulik- oder Pneumatikantriebssystem ausgebildet ist, welches einen zweiteiligen Kolben (13) besitzt, wobei der in der Betätigungsvorrichtung (7) gelagerte Teil (14) der Nadel (6) ein Endstück (15) mit größerem Durchmesser als dem Nadelschaft (10) aufweist und mit diesem Endstück (15) zwischen den beiden Kolbenteilen (16, 17) eingeklemmt ist.

3. Spritzgussdüsensystem nach Anspruch 1 oder 2, **dadurch gekennzeichnet, dass** der Teil (17) des zweiteiligen Kolbens (13) einen Kolbenstempel (18) aufweist, welcher aus dem Hydraulik- oder Pneumatikantriebssystem herausragt, wobei der maximale Weg des Kolbenstempels (18) aus dem Hydraulik- oder Pneumatikantriebssystem von einem Hubbegrenzer (8) bestimmt werden kann.

4. Spritzgussdüsensystem nach einem der Ansprüche 1 bis 3, **dadurch gekennzeichnet, dass** die Spritzgussdüse (1) mit ihrer bevorzugt konkav ausgebildeten Aufsitzfläche (23) der Düsenspitze (3) an der Kavitätsplatte (21) anliegt, welche eine konisch zulaufende Durchtrittsbohrung (22) aufweist, in welche die Nadel (6) zum Verschließen des Zulaufweges mit dem Vorderteil (24) der Nadelspitze (9) eindringt und formschlüssig mit ihrer Spitzenfläche (25) mit der inneren Oberfläche (26) der Kavitätsplatte (21) abschließt.

5. Spritzgussdüsensystem nach einem der Ansprüche 1 bis 4, **dadurch gekennzeichnet, dass** die Innenwand der Düsenspitze (3) in Fließrichtung der Spritzgussmasse zwischen zwei konisch zulaufenden Bereichen (27, 28) einen zylindrisch ausgebildeten Bereich besitzt, welcher als Nadelführungsbereich (12) in ständigem Kontakt mit dem zylindrischen Nadelschaft (10) steht.

6. Spritzgussdüsensystem nach einem der Ansprüche 1 bis 5, **dadurch gekennzeichnet, dass** der zylindrische Nadelschaft (10) in eine konisch zulaufende Nadelspitze (9) übergeht, wobei in diesem Übergangsbereich mehrere in Umfangsrichtung gleichmäßig verteilte Einkerbungen (11) vorgesehen sind.

7. Spritzgussdüsensystem nach einem der Ansprüche 1 bis 6, **dadurch gekennzeichnet, dass** die Einkerbungen (11) im Wesentlichen die Form eines Abschnittes eines Zylindermantels aufweisen oder keilförmig oder wendelförmig ausgebildet sind.

8. Spritzgussdüsensystem nach einem der Ansprüche 1 bis 7, **dadurch gekennzeichnet, dass** der Nadelführungsbereich (12) zylindrisch und glatt ausgebildet ist.

9. Spritzgussdüsensystem nach einem der Ansprüche 1 bis 8, **dadurch gekennzeichnet, dass** die Nadel (6) in den Verteilerplatten (29, 30) in einer Führungsbuchse (31) gelagert ist, welche die Verteilerplatten (29, 30) durchdringt und mit einem Abschnitt (32) in den Düsenkörper (2) ragt.

10. Kunststoff-Spritzgießwerkzeug mit mindestens einem Spritzgussdüsensystem gemäss einem der ansprüche 1 bis 9.

11. Kunststoff-Spritzgießwerkzeug nach Anspruch 10, **dadurch gekennzeichnet, dass** die mindestens eine Spritzgussdüse (1) in einem Düsenblock (33) und die mindestens eine Betätigungsvorrichtung (7) in einem Antriebsblock (34) angeordnet sind, dass zwischen dem Düsenblock (33) und dem Antriebsblock (34) Verteilerplatten (29, 30) für die Zuführung der Spritzgussmasse vorgesehen sind, dass der mindestens eine Hubbegrenzer (8) im Deckel (20) der Betätigungsvorrichtung (7) angeordnet ist und dass der Düsenblock (33), die Verteilerplatten (29, 30), der Antriebsblock (34) und der Deckel (20) den maschinenfesten Teil der Spritzgussanlage bilden.

12. Kunststoff-Spritzgießwerkzeug nach Anspruch 10, **dadurch gekennzeichnet, dass** die mindestens eine Betätigungsvorrichtung (7) in die Verteilerplatten (29, 30) integriert ist.

13. Kunststoff-Spritzgießwerkzeug nach einem der Ansprüche 10 bis 12, **dadurch gekennzeichnet, dass** der mindestens eine Hubbegrenzer (8) direkt von der Maschinenbedienseite aus betätigt werden kann.

14. Kunststoff-Spritzgießwerkzeug nach einem der Ansprüche 10 bis 13, **dadurch gekennzeichnet, dass** der mindestens eine Hubbegrenzer (8) so ausgebildet ist, dass mehr als eine Verschlussnadel (6) von einem Hubbegrenzer (8) in ihrem Hub begrenzt werder kann.

15. Verfahren zur Herstellung von Spritzgussteilen unter Verwendung eines Spritzgussdüsensystems nach einem der Ansprüche 1 bis 9 eines Kunststoff-Spritzgießwerkzeuges nach einem der Ansprüche 10 bis 14 für Spritzgussmaterialien unterschiedlicher Viskosität, **dadurch gekennzeichnet, dass** die Durchflussrate durch den Düsenkörper (2) gesteuert wird über die Summe der freien Querschnitte der Einkerbungen (11) im zylindrischen Nadelführungsbereich (12), die Form der Einkerbungen (11) und die Einstellung des Hubbegrenzers (8) am gegenüber liegenden Ende der Nadel (6) durch Bewegen des Hubbegrenzers (8) mit seinem kegel- oder keilförmigen Abschnitt (19) entlang eines Weges senkrecht zu einer gedachten Verlängerung der Nadelachse.

16. Verfahren nach Anspruch 15, **dadurch gekennzeichnet, dass** bei der Demontage und Remontage eines Spritzgussdüsensystems zur Reinigung der Spritzgussdüse (1) und der Nadel (6) von eventuell anhaftenden Kunststoffresten, oder zum Austausch eventuell beschädigter Teile des Spritzgussdüsensystems, der maschinenfeste Teil des Spritzgusswerkzeuges von der Maschinenaufspannplatte gelöst, der Deckel (20) entfernt und die Betätigungsvorrichtung (7) im geschlossenen Zustand gemeinsam mit der Führungsbuchse (31) und der Nadel (6) aus dem Spritzgussdüsensystem herausgezogen wird, worauf anschließend der Düsenkörper (2) mit der Düsenspitze (3) aus dem Düsenblock (33) herausnehmbar ist.

17. Verfahren nach Anspruch 16, **dadurch gekennzeichnet, dass** der maschinenfeste Teil der Spritzgussanlage vor dem lösen von der Maschinenaufspannplatte mit dem beweglichen Teil der Spritzgussanlage über Schnellspanneinrichtungen fest verbunden wird.

18. Verwendung eines Spritzgussdüsensystems nach einem der Ansprüche 1 bis 9 als Kaltkanalangusssystem zur Verarbeitung von Silikonkautschuk, von Thermoplasten oder von Gummi.

## Claims

1. An injection-molding nozzle system for injection-molding systems for plastic materials, which is equipped with a needle seal and is suitable to be used both for different cavities as well as for plastic materials of different viscosity, with the injection-molding nozzle (1) comprising a nozzle body (2) with nozzle tip (3) comprising an outlet opening (4) and an inlet opening (5) for the plastic mass, as well as a needle (6) which is arranged in the nozzle body, is axially displaceable in a longitudinal direction and comprises a needle tip (9) comprising at least one notch (11) for the pass-through of the injection-molding mass in its transitional region to the needle shaft (10), with the needle shaft (10) being in continual contact with a needle guide region (12) of the nozzle tip (3) and with an actuating apparatus (7) being provided for actuating the needle (6) displaceable in the nozzle body (2), **characterized in that** a stroke limiter (8) is provided with which the opening stroke of the needle (6) which is axially displaceable in the longitudinal direction can be adjusted, that the stroke limiter (8) comprises a conical or wedge-shaped section (19) which can be moved via an actuating apparatus along a path perpendicular to an imaginary extension of the needle axis, and that the nozzle body (2) is provided with a temperable configuration.

2. An injection-molding nozzle system according to claim 1, **characterized in that** the actuating apparatus (7) is configured as a hydraulic or pneumatic drive system which comprises a two-part piston (13), with the part (14) of the needle (6) held in the actuating apparatus (7) comprising an end piece (15) with a larger diameter than the needle shaft (10) and being clamped with said end piece (15) between the two piston parts (16, 17).

3. An injection-molding nozzle system according to claim 1 or 2, **characterized in that** the part (17) of the two-part piston (13) comprises a piston ram (18) which projects from the hydraulic or pneumatic drive system, with the maximum path of the piston ram (18) from the hydraulic or pneumatic system being capable of being determined by a stroke limiter (8).

4. An injection-molding nozzle system according to one of the claims 1 to 3, **characterized in that** the injection-molding nozzle (1) with its preferably concavely shaped bearing surface (23) of the nozzle tip (3) rests on the cavity plate (21) which comprises a conically tapering pass-through bore (22) into which the needle (6) penetrates for sealing off the inlet path with the front part (24) of the needle tip (9) and seals in a form-fitting manner the inner surface (26) of the cavity plate (21) with its tip surface (25).

5. An injection-molding nozzle system according to one of the claims 1 to 4, **characterized in that** the inner wall of the nozzle tip (3) comprises a cylindrically shaped region between two conically tapering regions (27, 28) in the direction of flow of the injection-molding mass, which cylindrically shaped region is in continual contact with the cylindrical needle shaft (10) as a needle guide region (12).

6. An injection-molding nozzle system according to one of the claims 1 to 5, **characterized in that** the cylindrical needle shaft (10) converges into a conically tapering needle tip (9), with several notches (11) being provided in said converging region which are evenly distributed in the circumferential direction.

7. An injection-molding nozzle system according to one of the claims 1 to 6, **characterized in that** the notches (11) substantially have the shape of a section of a cylinder jacket or are provided with a wedge-like or helical configuration.

8. An injection-molding nozzle system according to one of the claims 1 to 7, **characterized in that** the needle guide region (12) is provided with a cylindrical and smooth arrangement.

9. An injection-molding nozzle system according to one of the claims 1 to 8, **characterized in that** the needle (6) is held in the distributor plates (29, 30) in a guide bush (31) which penetrates the distributor plates (29, 30) and projects with a section (32) into the nozzle body (2).

10. An injection-molding tool for plastic materials, having at least one injection-molding nozzle system according to one of the claims 1 to 9.

11. An injection-molding tool for plastic materials according to claim 10, **characterized in that** the at least one injection-molding nozzle (1) is arranged in a nozzle block (33) and the at least one actuating apparatus (7) in a drive block (34), that distributor plates (29, 30) for the supply of the injection-molding mass are provided between the nozzle block (33) and the drive block (34), that the at least one stroke limiter (8) is arranged in the cover (20) of the actuating apparatus (7) and that the nozzle block (33), the distributor plates (29, 30), the drive block (34) and the cover (20) form the part of the injection-molding system which is fixed to the machine.

12. An injection-molding tool for plastic materials according to claim 10, **characterized in that** the at least one actuating apparatus (7) is integrated in the distributor plates (29, 30).

13. An injection-molding tool for plastic materials according to one of the claims 10 to 12, **characterized in that** the at least one stroke limiter (8) can be actuated directly from the machine operator's side.

14. An injection-molding tool for plastic materials according to one of the claims 10 to 13, **characterized in that** the at least one stroke limiter (8) is arranged in such a way that more than one sealing needle (6) can be limited in its stroke by a stroke limiter (8).

15. A method for producing injection-molded parts by using an injection-molding nozzle system according to one of the claims 1 to 9 of an injection-molding tool for plastic materials according to one of the claims 10 to 14 for injection-molding materials of different viscosities, **characterized in that** the flow rate through the nozzle body (2) is controlled via the sum total of the free cross sections of the notches (11) in the cylindrical needle guide region (12), the shape of the notches (11) and the setting of the stroke limiter (8) at the opposite end of the needle (6) by moving the stroke limiter (8) with its cone-like or wedge-shaped section (19) along a path perpendicular to an imaginary extension of the needle axis.

16. A method according to claim 15, **characterized in that** during the dismounting and remounting of an injection-molding nozzle system for cleaning the injection-molding nozzle (1) and the needle (6) from any adhering plastic residues, or for exchanging any possibly damaged parts of the injection-molding nozzle system, the part of the injection-molding tool which is fixed to the machine is detached from the machine clamping plate, the cover (20) is removed and the actuating apparatus (7) is pulled out in the closed state together with the guide bush (31) and the needle (6) from the injection-molding nozzle system, whereupon the nozzle body (2) can be removed with the nozzle tip (3) from the nozzle block (33).

17. A method according to claim 16, **characterized in that** the part of the injection-molding system which is fixed to the machine is fixedly connected to the movable part of the injection-molding system via quick-acting clamping devices prior to the detachment from the machine clamping plate.

18. The use of an injection-molding system according to one of the claims 1 to 9 as a cold-channel gating system for processing silicone caoutchouc, thermoplastic materials or rubber.

## Revendications

1. Système de buse d'injection pour des installations d'injection de matière plastique comportant une fermeture par aiguille et utilisable à la fois pour des cavités diverses et pour des matières plastiques à viscosités différentes,
la buse d'injection (1) comportant un corps (2) muni d'une pointe de buse (3) ayant un orifice de sortie (4) et un orifice d'alimentation (5) pour la masse de matière plastique ainsi qu'une aiguille (6) coulissant axialement dans la direction longitudinale du corps de buse et ayant une pointe (9) dont la zone transitoire avec le corps (10) de l'aiguille comporte au moins une gorge (11) pour le passage de la masse de matière d'injection,
le corps (10) de l'aiguille étant en contact permanent avec la zone de guidage (12) de l'aiguille dans la pointe (3) de la buse, et
un dispositif d'actionnement (7) actionne l'aiguille (6) coulissant dans le corps de buse (2),
**caractérisé en ce qu'**
un limiteur de course (8) limite la course d'ouverture de l'aiguille (6) coulissant axialement dans la direction longitudinale,
le limiteur de course (8) ayant un segment conique ou tronconique (19) déplacé par un dispositif d'actionnement le long d'un trajet perpendiculaire au prolongement géométrique de l'axe de l'aiguille, et
le corps de buse (2) est susceptible d'être mis en température.

2. Système de buse d'injection selon la revendication 1,
**caractérisé en ce que**
le dispositif d'actionnement (7) est un système d'entraînement hydraulique ou pneumatique muni d'un piston (13) en deux parties,
la partie (14) de l'aiguille (6) logée dans le dispositif d'actionnement (7) ayant un élément d'extrémité (15) de diamètre plus grand que celui du corps (10) de l'aiguille et serré sur cette pièce d'extrémité (15) entre les deux parties de piston (16, 17).

3. Système de buse d'injection selon la revendication 1 ou 2,
**caractérisé en ce que**
la partie (17) du piston (13) en deux parties comporte un poinçon de piston (18) sortant du système d'entraînement hydraulique ou pneumatique,
la course maximale du poinçon de piston (18) hors du système d'entraînement hydraulique ou pneumatique pouvant être délimitée par le limiteur de course (8).

4. Système de buse d'injection selon l'une des revendications 1 à 3,
**caractérisé en ce que**
la buse d'injection (1) s'applique par la surface d'appui (23) de la pointe de buse (3) de préférence de forme concave contre la plaque à cavité (21) ayant un perçage traversant (22), conique, dans lequel pénètre l'aiguille (6) pour fermer la course d'alimentation avec la partie avant (24) de la pointe (9) de l'aiguille et ferme par une liaison de forme la plaque de cavité (21) par la surface supérieure intérieure (26) de la surface de pointe (25).

5. Système de buse d'injection selon l'une des revendications 1 à 4,
**caractérisé en ce que**
la paroi intérieure de la pointe (3) de la buse possède dans la direction de passage de la masse d'injection, une zone cylindrique entre deux zones (27, 28) qui se rejoignent suivant une forme conique, cette surface cylindrique constituant la zone de guidage de l'aiguille (12) en contact permanent avec le corps cylindrique (10) de l'aiguille.

6. Système de buse d'injection selon l'une des revendications 1 à 5,
**caractérisé en ce que**
le corps cylindrique (10) de l'aiguille rejoint une pointe conique (9) et dans la zone transitoire il y a plusieurs gorges (11) réparties régulièrement dans la direction périphérique.

7. Système de buse d'injection selon l'une des revendications 1 à 6,
**caractérisé en ce que**
les gorges (11) ont principalement la forme d'un segment d'enveloppe cylindrique ou une forme de coin ou une forme d'hélice.

8. Système de buse d'injection selon l'une des revendications 1 à 7,
**caractérisé en ce que**
la zone de guidage d'aiguille (12) est cylindrique et lisse.

9. Système de buse d'injection selon l'une des revendications 1 à 8,
**caractérisé en ce que**
l'aiguille (6) est logée dans une douille de guidage (31) des plaques de réglage (29, 30), cette douille traversant les plaques (29, 30) et son segment (32) vient en saillie dans le corps de buse (2).

10. Outil d'injection de matière plastique comportant au moins un système d'injection selon l'une des revendications 1 à 9.

11. Outil d'injection de matière plastique selon la revendication 10,
**caractérisé en ce qu'**
il comporte au moins une buse d'injection (1) dans un bloc de buse (33) et au moins un dispositif d'actionnement (7) prévu dans un bloc d'entraînement (34),
des plaques de distribution (29, 30) étant prévues entre le bloc de buse (33) et le bloc d'entraînement (34) pour l'alimentation de la masse à injecter,
au moins un limiteur de course (8) est prévu dans le couvercle (20) du dispositif d'actionnement (7), et
le bloc de buse (33), les plaques de distribution (29, 30), le bloc d'entraînement (34) et le couvercle (20) forment la partie de l'installation d'injection solidaire de la machine.

12. Outil d'injection de matière plastique selon la revendication 10,
**caractérisé en ce qu'**
au moins un dispositif d'actionnement (7) est intégré dans les plaques de distribution (29, 30).

13. Outil d'injection de matière plastique selon l'une des revendications 10 à 12,
**caractérisé par**
au moins un limiteur de course (8) qui peut être actionné directement par le côté de commande de la machine.

14. Outil d'injection de matière plastique selon l'une des revendications 10 à 13,
**caractérisé en ce que**
le limiteur de course (8) est réalisé pour permettre de limiter la course de plus d'une aiguille d'obturation (6).

15. Procédé de fabrication de pièces injectées en utilisant un système de buse d'injection selon l'une des revendications 1 à 9, d'un outil d'injection de matière plastique selon l'une des revendications 10 à 14 pour des matières injectées à viscosités différentes,
**caractérisé en ce qu'**
on commande le débit dans le corps de buse (2) par la somme des sections libres des gorges (11) dans la zone cylindrique de guidage d'aiguille (12), la forme des gorges (11) et le réglage des limiteurs de course (8) à l'extrémité opposée de l'aiguille (6) par déplacement du limiteur de course (8) avec son segment conique ou tronconique (19) le long d'un trajet perpendiculaire au prolongement géométrique de l'axe d'aiguille.

16. Procédé selon la revendication 15,
**caractérisé en ce qu'**
on détache la partie de l'outil d'injection, solidaire de la machine par rapport à sa plaque de serrage sur la machine pour le démontage et le remontage du système de buse d'injection afin de nettoyer la buse d'injection (1) et l'aiguille (6) et enlever les éventuelles résidus de matière plastique qui s'accrochent ou remplacer des pièces éventuellement endommagées du système de buse d'injection, en enlevant le couvercle (20) et le dispositif d'actionnement (7) en commun à l'état fermé avec la douille de guidage (31) et l'aiguille (6) pour les dégager du système de buse d'injection puis on enlève le corps de buse (2) avec la pointe (3) du bloc de buse (33).

17. Procédé selon la revendication 16,
**caractérisé en ce qu'**
avant de détacher la partie de l'installation d'injection, solidaire de la machine par rapport à la plaque de serrage sur la machine, on relie solidairement la partie mobile de l'installation d'injection par des installations de serrage rapides.

18. Application d'un système de buse d'injection selon l'une des revendications 1 à 9 comme système d'injection de canal froid pour traiter du caoutchouc de silicone, des matières thermoplastiques ou du caoutchouc.
